# EUROPÄISCHE PATENTSCHRIFT

(11) **EP 1 698 219 B1**
(45) Veröffentlichungstag und Bekanntmachung des Hinweises auf die Patenterteilung: **22.05.2013**
(21) Anmeldenummer: 06004351.0
(22) Anmeldetag: 03.03.2006
(51) Int. Cl.: A01B 73/04

(54) **Getriebe für Bodenbearbeitungsmaschine**
Transmission for soil working machine
Transmission pour machine de travail du sol

(30) Priorität: 03.03.2005 DE 102005009767
(43) Veröffentlichungstag der Anmeldung: 06.09.2006
(73) Patentinhaber: Rögelberg Holding GmbH & Co. KG, 49716 Meppen (DE)
(72) Erfinder: Seggering, Manfred, 49744 Geeste (DE); Suelmann, Anton, 49716 Meppen (DE)
(74) Vertreter: Bünemann, Egon

(56) Entgegenhaltungen:
- EP-A- 0 548 720
- CH-A- 330 021
- DE-A1- 3 628 605
- DE-A1- 4 114 342
- US-A- 4 042 039
- US-A1- 2003 146 006

## Beschreibung

Die vorliegende Erfindung betrifft ein Getriebe für eine Bodenbearbeitungsmaschine, die zumindest einen in eine Arbeitsstellung quer zu einer Fahrtrichtung positionierbaren Maschinenbalken mit einer Mehrzahl von Arbeitswerkzeugen aufweist. Das Getriebe ist mit einem Maschinenrahmen verbunden und besitzt eine in einem Getriebegehäuse angeordnete Antriebswelle und wenigstens eine mit dieser antriebsmäßig verbundene Abtriebswelle.

Aus der EP 0 333 109 A1 ist eine Bodenbearbeitungsmaschine bekannt, bei der eine Antriebskraft über Riemenverbindungen von einem über eine Zapfwelle angetriebenen Hauptgetriebe über Gelenkwellen zu auf den Maschinenbalken befindlichen Nebengetrieben übertragen wird. Nachteilig ist bei dieser Bodenbearbeitungsmaschine, daß die Kraftübertragungsmittel teilweise freiliegend sind und so zum einen leicht verschmutzen und zum anderen während des Betriebes ein erhebliches Gefahrenpotential darstellen. Darüber hinaus kommt es aufgrund der Einwirkung von Witterungseinflüssen und der Verschmutzung zu Abnutzungserscheinungen, die die Lebensdauer einer solchen Getriebekombination verringern.

Die US 4,042,039 offenbart eine Bodenbearbeitungsmaschine mit in einer Reihe nebeneinander angeordneten, um aufwärts gerichtete Achsen drehbare Werkzeugkreisel. Dieses Dokument wie auch die US 2003/0146006 A1 zeigen keine Verschwenkbarkeit eines Maschinenbalkens um eine Zwischenwelle.

Die DE 41 14 342 A1 sowie die DE 36 28 605 A1 offenbaren Heuwerbungsmaschinen, deren Kreiselrechen aus einer Fahrt- in eine Arbeitsstellung gebracht werden können. Genauso wie diese zeigen auch die EP 0 548 720 A1 und die CH 330021 kein Getriebe mit einer Zwischenwelle, um die Antriebswelle und Maschinenbalken aus einer Arbeitsstellung in eine vertikale Fahrstellung verschwenkbar sind.

Es ist Aufgabe der vorliegenden Erfindung, ein Getriebe für eine Bodenbearbeitungsmaschine vor dem Hintergrund der beschriebenen Nachteile zuverbessern.

Die Aufgabe wird gelöst durch ein Getriebe der Eingangs genannten Art, welches die Merkmale des kennzeichnenden Teils des Anspruchs 1 aufweist.

Bei einem Getriebe gemäß der Erfindung sind zunächst die kraftübertragenden und sich drehenden Antriebselemente im Wesentlichen innerhalb des Getriebegehäuses angeordnet. Die Verschmutzung von Teilen, die der Kraftübertragung dienen, wird daher auf ein Minimum reduziert. Weiterhin weist das erfindungsgemäße Getriebe einen an einem Maschinenrahmen anordbaren starren Haupt-Getriebeteil, in dem die Antriebswelle gelagert ist, sowie zumindest einen daran angeordneten, verschwenkbaren Getriebeteil auf. Letzterer umfasst zumindest teilweise die Abtriebswelle. Gleichzeitig ist der Arbeitswerkzeuge tragende Maschinenbalken an dem verschwenkbaren Teil des Getriebes angeordnet, wobei sowohl die Abtriebswelle als auch der Maschinenbalken um die Drehachse der Zwischenwelle verschwenken. Auf komplizierte und störungsanfällige Konstruktionen zur Übertragung der Antriebskräfte auf verschwenkbare Maschinenbalken kann daher verzichtet werden- Der verschwenkbare Getriebeteil kann mit dem daran anzuordnenden Maschinenbalken aus einer Arbeitsstellung in eine vertikale Fahrstellung verschwenken, wobei keine kraftübertragenden Teile des Getriebes frei und verschmutzungsanfällig werden.

Die Zwischenwelle ist im Kraftfluss zwischen der Antriebswelle und der Abtriebswelle angeordnet und dient insbesondere der Übertragung der Antriebskraft von dem starren Getriebegehäuseteil zu dem verschwenkbaren Teil des Getriebes bzw. in diesen hinein. Die Zwischenwelle kann daher zu großen Teilen in dem starren Getriebegehäuseteil angeordnet sein und greift beispielsweise nur in einen kleinen Bereich des schwenkbaren Teils ein. Es sind jedoch auch andere Ausführungsformen denkbar, bei der die Zwischenwelle zu großen Teilen in dem schwenkbaren Teil gelagert ist nur in geringem Ausmaß in den starren Getriebeteil eingreift. Sie kann auch als Durchtrieb ausgebildet sein, so dass weitere Anschlußmöglichkeiten zur Kraftübertragung an dem erfindungsgemäßen Getriebe vorhanden sind. Das Getriebe gemäß der Erfindung ersetzt die aus dem Stand der Technik bekannte Kombination von Zentralgetriebe und den Maschinenbalken zugeordneten Nebengetrieben. Die kompakte Bauweise und der Verzicht auf verschmutzungs- und störungsanfällige Gelenkwellen machen das Getriebe nicht nur langlebiger und sicherer, sondern auch in der Herstellung günstiger. Darüber hinaus werden die Antriebskräfte nur über kurze Wege übertragen, um unnötige Kraftverluste zu vermeiden. Gleichzeitig ist auch ein unbeeinflußter Kraftfluß bei verschwenkten Maschinenbalken möglich, so daß der Maschinenbalken auch in einer Schräg- oder Hanglage verwendet werden kann, während ein möglicher weiterer Maschinenbalken eine daran angeschlossene ebene Fläche bearbeitet.

Bei einer weiteren Ausgestaltung eines erfindungsgemäßen Getriebes greift die Abtriebswelle vorteilhafterweise in etwa senkrecht in oder auf den Maschinenbalken ein und leitet die Kraft ohne große Verluste auf den Maschinenbalken über. Für eine einfach vorzunehmende Verschwenkung des Maschinenbalkens mit dem daran angeordneten verschwenkbaren Getriebeteil ist es darüber hinaus möglich, innerhalb des verschwenkbaren Getriebes eine Kegelradstufe zur Übertragung der Kraft von der Zwischenwelle auf die Abtriebswelle zu verwenden. Eine solche Kegelradstufe führt auch bei verschwenktem oder verschwenkendem Maschinenbalken zu einer kontinuierlichen Verbindung zwischen Antriebswelle und Abtriebswelle. Die Arbeitswerkzeuge des Maschinenbalkens können so nicht unkontrolliert drehen bzw. auch in einer Schrägstellung des Maschinenbalkens arbeiten.

Weitere vorteilhafte Ausführungen der Erfindungen sind den Unteransprüchen und der nachfolgenden Figurenbeschreibung zu entnehmen. In den schematisch dargestellten Abbildungen eines Getriebes zeigt:
- Fig. 1: Eine Rückansicht eines erfindungsgemäßen Getriebes mit zwei daran angeordneten Maschinenbalken mit Arbeitswerkzeugen,
- Fig. 2: eine Draufsicht auf den erfindungsgemäßen Gegenstand mit zwei Maschinenbalken in Arbeitsstellung,
- Fig. 3: einen Schnitt entlang I-I durch den Gegenstand gemäß Fig. 1.

Das erfindungsgemäße Getriebe weist einen starren, ortsfest angeordneten Haupt-Getriebeteil 1 auf, der über zwei schwenkbare Getriebeteile 2 mit Maschinenbalken 3 verbunden ist. Beide Maschinenbalken 3 wiederum sind mit einer Reihe von Arbeitswerkzeugen 4 versehen, die beispielsweise als Kreiselrechen ausgebildet sind und von je einer Abtriebswelle 10 des Getriebes angetrieben werden.

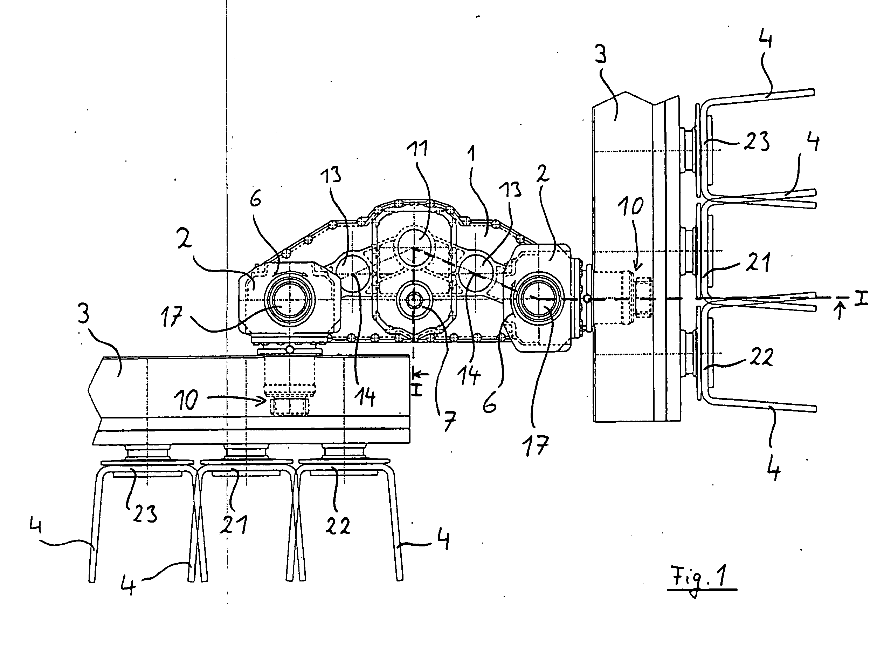

Der in der Fig. 1 linke Maschinenbalken 3 befindet sich in einer Arbeitsstellung quer zu einer Fahrtrichtung, während der in der Figur rechte Maschinenbalken 3 in einer Fahrstellung angeordnet ist, die eine Verringerung der Straßenbreite einer Bodenbearbeitungsmaschine bewirkt. Hierfür wurde der Maschinenbalken 3 um annähernd 90° aus seiner Arbeitsstellung in eine vertikale Position verschwenkt. Die Verschwenkungsrichtung der Maschinenbalken 3 in vertikaler Richtung ist durch Pfeile 6 gekennzeichnet. Die Fahrtrichtung entspricht einer Richtung senkrecht aus der Bildebene heraus, wobei unter "quer zu einer Fahrtrichtung" jedoch nicht nur die Position des Maschinenbalkens 3 in einem 90°-Winkel senkrecht zur Fahrtrichtung, sondern darüber hinaus auch beliebig schräge Arbeitsstellungen mit einer Querkomponente zur Fahrtrichtung verstanden werden. Vorzugsweise befindet sich ein Maschinenbalken 3 in einer Arbeitsstellung innerhalb eines Winkelbereiches von 45° - 135° zur Fahrtrichtung.

Außer in dem Eingangsbereich für den Antrieb einer Antriebswelle 7, die aber auch zumindest im wesentlichen in dem Getriebe angeordnet ist, weist das erfindungsgemäße Getriebe keine sich im Betrieb freiliegend drehenden Antriebsmittel auf und ist daher besonders verschmutzungsunempfindlich. Der Eingriffsbereich des Getriebes, der einen Verbindungsbereich zwischen Antriebswelle 7 und einer nicht dargestellten Zapfwelle eines Schleppfahrzeuges darstellt, liegt vorteilhafterweise in etwa in einer Flucht mit der Drehachse der Zapfwelle. Dieses führt bei maximalen Abweichungen von in etwa 15° zwischen der Drehachse der Antriebswelle 7 und der Drehachse der Zapfwelle zu einer sehr guten Kraftübertragung von der Zapfwelle in das erfindungsgemäße Getriebe.

Innerhalb des Getriebes wird die Antriebskraft von der Abtriebswelle 10 zunächst auf ein Wechselrad 8 einer Wechselradstufe geleitet. Dieses treibt ein weiteres Wechselrad 9 an, welches sich auf einer Getriebewelle 11 vorteilhafterweise oberhalb der Antriebswelle 7 befindet. Die durch diese beiden Wechselräder 8 und 9 ausgebildete Wechselradstufe ist nach Öffnen des Getriebegehäuses 30 auf einfache Weise von außen erreichbar, so daß das erfindungsgemäße Getriebe mit geringem Aufwand durch Wechsel der Räder 8,9 auch mit anderen Übersetzungsverhältnissen betrieben werden kann. Des weiteren ist es durch den Austausch des Wechselradpaares gegen ein weiteres Wechselradpaar möglich, zusätzliche Übersetzungsverhältnisse zu erzeugen und das Getriebe unterschiedlichen Anforderungen anzupassen.

Die Anordnung der Getriebewelle 11 oberhalb oder unterhalb der Antriebswelle 12 bewirkt darüber hinaus auf konstruktiv einfache Weise die Verteilung der Antriebskraft zu beiden möglichen Seiten des Getriebes. Ein zusätzliches Stirnrad 12, das ebenfalls auf der Getriebewelle 11 angeordnet ist oder von dieser ausgebildet wird, leitet die Antriebskraft weiter in Richtung der Maschinenbalken 3. Das Stirnrad 12 treibt zwei Zahnräder zweier weiterer Getriebewellen 13 an, die vorteilhafterweise höhenversetzt zu der Getriebewelle 11 angeordnet sind. So sind die beiden Drehachsen 14 der Getriebewellen 13 in einer Ebene angeordnet, die zwischen den Drehachsen der Antriebswelle 7 und der Getriebewelle 11 verläuft. Der Platzbedarf für das erfindungsgemäße Getriebe wird daher auf ein Minimum beschränkt.

Die Stirnräder 15 der Getriebewellen 13 treiben jeweils über ein Zwischen-Stirnrad 16 die Zwischenwellen 17 in den Seitenbereichen des Getriebes an. Beide Zwischenwellen 17 führen von dem starren, d.h. ortsfest angeordneten Haupt-Getriebeteil 1 in einen schwenkbaren Getriebeteil 2 hinein, von dem die Antriebskraft über eine Kegelradstufe auf die Abtriebswelle 10 und weiter in den Maschinenbalken 3 geleitet wird. Das gesamte Getriebe ist in Modulbauweise gefertigt, so daß dieselbe Getriebebauart für unterschiedlich dimensionierte Maschinenbalken 3 verwendet werden kann. Beispielsweise ist es denkbar, durch die Verlängerung eines Flansches 18 eines schwenkbaren Getriebeteils 2 in unterschiedlich tiefe Maschinenbalken 3 einzugreifen. Durch die Verwendung unterschiedlich dimensionierter Getriebeteile ist es desweiteren auch möglich, die Abtriebswelle 10 parallel zu ihrer Drehachse 20 zu verlagern und ebenfalls eine Anpassung an verschiedene Maschinenbalken 3 vorzunehmen.

Der Innenraum des schwenkbaren Getriebeteils 2 weist eine Kegelradstufe auf, die die Antriebskraft von der Zwischenwelle 17 auf die Abtriebswelle 10 überträgt. Bei einer Verschwenkung des Maschinenbalkens 3 mitsamt des verschwenkbaren Getriebeteils 2 bleiben beide Wellen 17,10 über das Kegelradpaar immer in Eingriff, so daß kein zusätzlicher konstruktiver Aufwand für Ein- bzw. Außereingriffsstellungen benötigt wird. Gleichzeitig sind die Arbeitswerkzeuge 21, 22, 23 in einer hochgeschwenkten Position gesperrt, falls über die Zapfwelle keine Kräfte ausgeübt werden.

Der Flansch 18 der schwenkbaren Getriebeteile 2 ist so ausgebildet, daß eine Verschwenkung des Maschinenbalkens 3 um mindestens 75° ermöglicht wird. Vorteilhafterweise sind 90°-Verschwenkungen oder Verschwenkungen um mehr als 90° möglich.

Ein auf der Abtriebswelle 10 im Bereich des Maschinenbalkens 3 angeordnetes Ritzel 19 treibt über ein in der Fig. 1 nicht dargestelltes weiteres Ritzel das Arbeitswerkzeug 21 an, welches hier als Kreiselrechen dargestellt ist. Von diesem, dem Arbeitswerkzeug 21 zugeordneten Ritzel 24 werden sowohl das Arbeitswerkzeug 22 wie auch die weiter außenliegenden Arbeitswerkzeuge 23 angetrieben. Die Kombination von dem auf der Abtriebswelle angeordnetem Ritzel 19 und dem dem Arbeitswerkzeug 21 zugeordneten weiteren Ritzel 24 bildet eine weitere Untersetzungsstufe im Bereich des Maschinenbalkens 3 aus. Abhängig von der Größendimensionierung der beteiligten Zahnräder 19, 24 handelt es sich hierbei um eine Übersetzungs- oder eine Untersetzungsstufe. Von dem Ritzel 24 wird ein Teil der Kraft auf die weiteren Ritzel 25 der übrigen Arbeitswerkzeuge 4 geleitet. Der Antrieb des zweiten Arbeitswerkzeuges 21 begünstigt eine bessere Verteilung der Antriebskraft in dem Maschinenbalken 3, bei der die Kraft über kürzere Wege übertragen wird und die verwendeten Ritzel 25 geschont werden. Gleichzeitig ermöglicht der Antrieb des zweiten Ritzels 24 einen optimalen Kompromiß zwischen einem einfach vertikal verschwenkbaren Maschinenbalken 3 und einer vollständigen Abdeckung der benötigten Arbeitsbreite einer Bodenbearbeitungsmaschine. Der gesamte Maschinenrahmen muß -wenn überhaupt- nur geringfügig angehoben werden, um den während des Verschwenkens von dem inneren Arbeitswerkzeug 4, 22 und dem innenliegenden Teil des Maschinenbalkens 3 überstrichenen Bereich freizugeben. Gleichzeitig kann auch der direkt unter dem starren Haupt-Getriebeteil 1 befindliche Boden bearbeitet werden. Dieses ist insbesondere für die Verwendung des erfindungsgemäßen Getriebes bei Kreiseleggen von Vorteil.

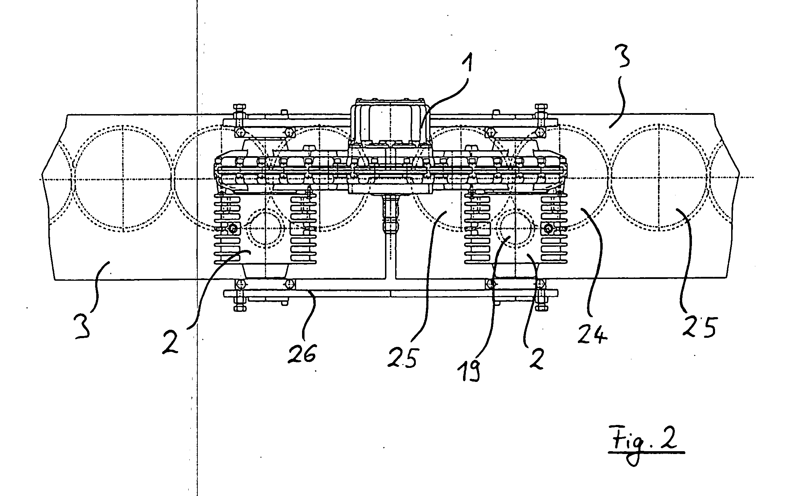

Fig. 2 verdeutlicht den kompakten Aufbau des erfindungsgemäßen Getriebes. Das gestrichelt angedeutete Ritzel 19 einer eine Drehachse 20 aufweisenden Abtriebswelle 10 treibt jeweils ein großes Ritzel 24 in dem Maschinenbalken an, welche dem jeweils von innen betrachtet zweiten Arbeitswerkzeug 21 zugeordnet ist. Von dort wird die Antriebskraft auf die übrigen Arbeitswerkzeuge 22, 23 weitergeleitet. Beide Maschinenbalken 3 sowie das erfindungsgemäße Getriebe sind an einem Maschinenrahmen 26 angeordnet, der üblicherweise über eine Drei-Punkt-Aufhängung an einem Schleppfahrzeug befestigt ist. Um die Verschwenkung der Maschinenbalken 3 mitsamt der schwenkbaren Teile 2 des Gehäuses besonders effizient zu gestalten, ist es erfindungsgemäß vorgesehen, den verschwenkbaren Teil 2, bzw. die verschwenkbaren Teile 2 des Getriebes mitsamt den daran angeordneten Maschinenbalken 3 um die jeweilige Drehachse 27 der beiden Zwischenwellen 17 zu verschwenken. Vorteilhafterweise ist ein Maschinenbalken 3 hierzu nicht über den verschwenkbaren Teil 2 des Getriebes befestigt, sondern über eigene Flansche 28 auch von dem Maschinenrahmen 26 gehalten.

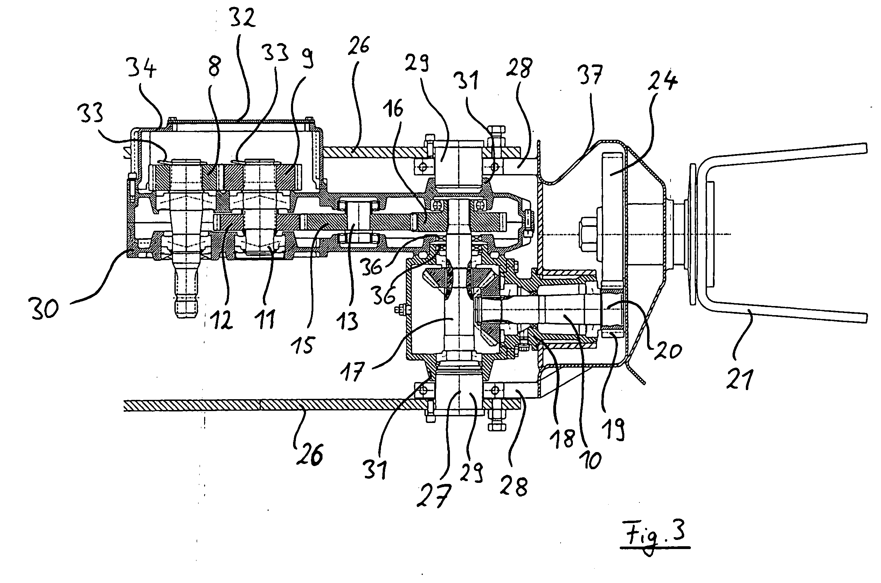

Erfindungsgemäß ist weiterhin vorgesehen, das Getriebegehäuse 30 und damit das Getriebe selbst über Achsbolzen 29 zu zentrieren, die gleichzeitig auch als Widerlager für die beiden Maschinenbalken 3 dienen. Hierfür weist das Getriebegehäuse 30 im Bereich der Wellenenden der Zwischenwellen 17 Führungswände 31 auf, in die ein Achsbolzen 29 paßgenau eingreift, wodurch die Verschwenkung der Maschinenbalken 3 und der verschwenkbaren Getriebeteile 2 um identische Drehachsen 27 unterstützt wird (Fig. 3).

Das verwendete erfindungsgemäße Getriebe ist kompakt und dennoch platzsparend konstruiert, so daß bei geringen Materialkosten alle Anforderungen an ein langlebiges Getriebe erfüllt sind. Der gewinkelte Schnitt durch das Getriebe gemäß Fig. 3 zeigt insbesondere die Dimensionierung der Abtriebswellen mit den darauf befindlichen Zahnrädern, die jeweils für einen dauerhaften Betrieb ausgelegt sind. Statt der Wechselradstufe mit den Wechselrädern 8 und 9, die durch einfaches Abnehmen eines Wechselraddeckels 32 mit Hilfe der Sicherungselemente 33 leicht von ihren jeweiligen Wellen abzuziehen sind, kann bei Bedarf auch eine Schaltgetriebestufe vorgesehen sein. Diese ist vorteilhafterweise mit Hilfe eines Stellmittels auch von außerhalb des Getriebes zu betätigen und vergrößert die Flexibilität des erfindungsgemäßen Getriebes weiter.

Die Antriebswelle 7, sowie die beiden Getriebewellen 11 und 13 sind in dem starren Haupt-Getriebeteil 1 gelagert und werden aus einem gemeinsamen Vorrat geschmiert. Um beim Öffnen des Wechselraddeckels 32 ein Austreten von Öl aus dem Getriebe zu verhindern, ist der untere, der Antriebswelle 7 nahe liegende Rand 34, an dem der Wechselraddeckel 32 anliegt, höher gezogen, so daß eine Art Wanne ausgebildet wird, in der sich im Ruhestand das Öl sammelt.

Zur Vermeidung von Ölverlusten, die durch die Bewegung des schwenkbaren Getriebeteils 3 an dem starren Getriebeteil 2 entlang verursacht werden könnten, sind weiterhin sowohl der Innenraum des starren Getriebeteils 1 als auch der Innenraum des schwenkbaren Getriebeteils 2 im Übergangsbereich mit Dichtungen 36 abgedichtet.

Der Abtriebsflansch 18 sitzt paßgenau in einer entsprechenden Innenausnehmung der Maschinenbalkenwanne 37, wobei die Abmessungen so gewählt sind, daß ggf. unter Verwendung einer weiteren Dichtung auch die in der Maschinenbalkenwanne 37 befindlichen Schmierstoffe nicht austreten können.

Vorteilhafterweise wird das Getriebe gemäß der Erfindung für eine Kreiselegge verwendet, da bei dieser die Anforderungen an die zur Verfügung stehenden Antriebskräfte vergleichsweise groß sind und das erfindungsgemäße Getriebe aufgrund der kompakten Bauart diesen Anforderungen genügt.

## Patentansprüche

1. Getriebe für eine Bodenbearbeitungsmaschine, die zumindest einen in eine Arbeitsstellung quer zu einer Fahrtrichtung positionierbaren Maschinenbalken (3) mit einer Mehrzahl von Arbeitswerkzeugen (21, 22, 23) aufweist, und das mit einem Maschinenrahmen (26) verbindbar ist, mit einem an dem Maschinenrahmen anordbaren starren Hauptgetriebeteil und in diesem gelagerten Antriebswelle (7) und mit wenigstens einer mit dieser antriebsmäßig verbundenen Abtriebswelle (10), **dadurch gekennzeichnet, dass** die kraftübertragenden und sich drehenden Antriebselemente im Wesentlichen innerhalb des Getriebegehäuses angeordnet sind, ein die Abtriebswelle (10) zumindest teilweise umfassender Teil (2) des Getriebes zusammen mit dem daran angeordneten Maschinenbalken (3) aus der Arbeitsstellung in eine vertikale Fahrstellung verschwenkbar ist und der verschwenkbare Teil (2) des Getriebes eine Zwischenwelle (17) aufweist, um deren Drehachse (27) die Abtriebswelle und der Maschinenbalken (3) verschwenken.

2. Getriebe nach Anspruch 1, **dadurch gekennzeichnet, daß** die Abtriebswelle (10) in etwa senkrecht in den Maschinenbalken (3) eingreift.

3. Getriebe nach einem der Ansprüche 1 oder 2, **dadurch gekennzeichnet, daß** der verschwenkbare Teil (2) des Getriebes eine Kegelradstufe auf weist, über die die Zwischenwelle (17) mit der Abtriebswelle (10) verbunden ist.

4. Getriebe nach Anspruch 3, **dadurch gekennzeichnet, daß** die Abtriebswelle (10) das der Antriebswelle (7) nächstkommende erste Arbeitswerkzeug (22) nur mittelbar antreibt.

5. Getriebe nach Anspruch 4, **dadurch gekennzeichnet, daß** die Abtriebswelle (10) über das zweite oder dritte Arbeitswerkzeug (21) die übrigen Arbeitswerkzeuge (22, 23) antreibt.

6. Getriebe nach einem der Ansprüche 1 bis 5, **dadurch gekennzeichnet, daß** die Abtriebswelle (10) über eine Übersetzungsstufe in dem Maschinenbalken (3) die Arbeitswerkzeuge (21, 22, 23) antreibt.

7. Getriebe nach Anspruch 6, **dadurch gekennzeichnet, daß** die Abtriebswelle (10) zur Ermöglichung der Verwendung unterschiedlich großer Zahnräder (24) in dem Maschinenbalken (3) parallel zu ihrer Drehachse (20) verlagerbar ist.

8. Getriebe nach einem der Ansprüche 1 bis 7, **dadurch gekennzeichnet, daß** der schwenkbare Teil (2) des Getriebes über einen Führungsflansch (18) in den Maschinenbalken (3) eingreift.

9. Getriebe nach einem der Ansprüche 1 bis 8, **dadurch gekennzeichnet, daß** die Abtriebswelle (10) und der Maschinenbalken (3) um in etwa 90° verschwenkbar sind.

10. Getriebe nach einem der Ansprüche 1 bis 9, **dadurch gekennzeichnet, daß** der schwenkbare Teil (2) des Getriebes einerseits an dem ortsfesten Teil (1) des Getriebes und andererseits an dem Maschinenrahmen (3) gelagert ist.

11. Getriebe nach einem der Ansprüche 1 bis 10, **dadurch gekennzeichnet, daß** zur Zentrierung des schwenkbaren Teils (2) des Getriebes zumindest ein Achsbolzen (29) vorgesehen ist.

12. Getriebe nach Anspruch 11, **dadurch gekennzeichnet, daß** der Maschinenbalken (3) und das Getriebe über den Achsbolzen (29) gegenüber dem Maschinenrahmen (26) abgestützt sind.

13. Getriebe nach einem der Ansprüche 1 bis 12, **gekennzeichnet durch** zu mindest eine Wechselradstufe.

14. Getriebe nach Anspruch 13, **dadurch gekennzeichnet, daß** die Wechselradstufe eine Stirnradwechselstufe ist.

15. Getriebe nach einem der Ansprüche 1 bis 12, **gekennzeichnet durch** eine Schaltgetriebestufe.

16. Getriebe nach einem der Ansprüche 1 bis 15, welches über eine Zapfwelle eines Schleppfahrzeugs antreibbar ist, **dadurch gekennzeichnet, daß** die Antriebswelle (7) des Getriebes in etwa in einer Flucht mit der Achse der Zapfwelle angeordnet ist.

17. Kreiselegge, **gekennzeichnet durch** ein Getriebe nach einem der vorhergehenden Ansprüche.

## Claims

1. Transmission system for a soil cultivating machine, having at least one machine bar (3) that can be positioned transversely in relation to a direction of travel with a plurality of working tools (21, 22, 23), and which can be connected to a machine frame (26), with a rigid main drive part that can be arranged on the machine frame and a drive shaft (7) mounted in the latter and with at least one output shaft (10) connected to this by driving means, **characterised in that** the power transmission and rotating drive elements are essentially arranged inside the transmission housing, a part (2) of the transmission system that at least partially encloses the drive shaft (10) together with the machine bar (3) arranged with this latter can be pivoted out of the working position and into a vertical driving position and the pivotable part (2) of the transmission system comprises an intermediary shaft (17) in order to pivot the output shaft and the machine bar (3) around its axis of rotation.

2. Transmission system according to Claim 1, **characterised in that** the output shaft (10) engages approximately vertically into the machine frame (3).

3. Transmission system according to Claim 1 or Claim 2 above, **characterised in that** the pivoting part (2) of the transmission system comprises a bevel wheel stage, through which the intermediary shaft (17) is connected to the output shaft (10).

4. Transmission system according to Claim 3 above, **characterised in that** the output shaft (10) only drives the first working tool (22) next to the drive shaft (7) indirectly.

5. Transmission system according to Claim 4 above, **characterised in that** the output shaft (10) drives the remaining working tools (22, 23) through the second or the third working tool (21).

6. Transmission system according to any of the preceding Claims 1 to 5 above, **characterised in that** the output shaft (10) drives the working tools (21, 22, 23) through a transmission stage in the machine frame (3) which drives the working tools (21, 22, 23).

7. Transmission system according to Claim 6 above, **characterised in that** the output shaft (10) can be moved parallel to its axis of rotation (20) in order to allow different sizes of gear wheels (24) to be used in the machine bar (3).

8. Transmission system according to any of the preceding Claims 1 to 7, **characterised in that** the pivotable part (2) of the transmission system projects into the machine bar (3) by means of a guide flange (18).

9. Transmission system according to any of the preceding Claims 1 to 8, **characterised in that** the output shaft (10) and the machine bar can be pivoted through an angle of about 90°.

10. Transmission system according to any of the preceding Claims 1 to 9, **characterised in that** the pivotable part (2) of the transmission system is mounted on the one side on the fixed part (1) of the transmission system and on the other side on the machine frame (3).

11. Transmission system according to any of the preceding Claims 1 to 10, **characterised in that** at least one axle bolt (29) is provided in order to centre the pivotable part (2) of the transmission system.

12. Transmission system according to Claim 11 above, **characterised in that** the machine bar (3) and the transmission system are supported against the machine frame (26) by means of the axle bolt (29).

13. Transmission system according to any of the preceding Claims 1 to 12, **characterised by** at least one change gear wheel.

14. Transmission system according to Claim 13 above, **characterised in that** the change gear wheel is a change spur gear stage.

15. Transmission system according to any of the preceding Claims 1 to 12, **characterised by** a switch gear stage.

16. Transmission system according to any of the preceding Claims 1 to 15 which can be driven by a power take-off shaft, **characterised in that** the drive shaft (7) of the transmission system is arranged approximately in line with the axis of the power take-off.

17. Harrow, **characterised by** a transmission system according to any of the preceding claims.

## Revendications

1. Transmission destinée à une machine de travail du sol comportant au moins une poutre (3) équipée d'un ensemble d'outils de travail (21, 22, 23) pouvant être positionnée dans une position de travail orientée transversalement par rapport à la direction de déplacement, et pouvant être reliée à un châssis (26) ainsi que d'une partie de transmission principale rigide pouvant être montée sur le châssis d'un arbre d'entrainement (7) monté dans celle-ci, et d'au moins un arbre de sortie (10) pouvant être mise en prise avec celui-ci,
**caractérisée en ce que**
les éléments d'entrainement rotatifs transmettant la force sont essentiellement montés à la partie interne, du carter de la transmission, une partie (2) de la transmission entourant au moins partiellement la roue de sortie (10) pouvant être déplacée par pivotement avec la poutre (3) montée sur celle-ci de la position de travail dans une position de déplacement verticales, et la partie pivotante (2) de la transmission comporte un arbre intermédiaire (17) autour de l'axe de rotation (27) duquel l'arbre de sortie et la poutre (3) pivotent.

2. Transmission conforme à la revendication 1,
**caractérisée en ce que**
l'arbre de sortie (10) vient en prise essentiellement verticalement dans la poutre (3).

3. Transmission conforme à l'une des revendications 1 et 2,
**caractérisée en ce que**
la partie pivotante (2) de la transmission présente un étage à roue conique par lequel l'arbre intermédiaire (17) est relié à l'arbre de sortie (10).

4. Transmission conforme à la revendication 3,
**caractérisée en ce que**
l'arbre de sortie (10) n'entraine qu'indirectement le premier outil de travail (22) le plus proche de l'arbre d'entrainement (7).

5. Transmission conforme à la revendication 4,
**caractérisée en ce que**
l'arbre de sortie (10) entraine les autres outils de travail (22, 23) par l'intermédiaire du second ou du troisième outil (21).

6. Transmission conforme à l'une des revendications 1 à 5,
**caractérisée en ce que**
l'arbre de sortie (10) entraine les outils de travail (21, 22, 23) par l'intermédiaire d'un étage de démultiplication dans la poutre (3) de la machine.

7. Transmission conforme à la revendication 6,
**caractérisée en ce que**
pour permettre l'utilisation de roues dentées (24) de différente dimension, l'arbre de sortie (10) peut être déplacé dans la poutre (3) parallèlement à son axe de rotation (20).

8. Transmission conforme à l'une des revendications 1 à 7,
**caractérisée en ce que**
la partie pivotante (2) de la transmission vient en prise dans la poutre (3) par l'intermédiaire d'une bride de guidage (18).

9. Transmission conforme à l'une des revendications 1 à 8,
**caractérisée en ce que**
l'arbre de sortie (10) et la poutre (3) peuvent être déplacés par pivotement d'environ 90°.

10. Transmission conforme à l'une des revendications 1 à 9,
**caractérisée en ce que**
la partie pivotante (2) de la transmission est montée d'une part sur la partie fixe (1) de la transmission et d'autre part sur le châssis (3) de la machine.

11. Transmission conforme à l'une des revendications 1 à 10,
**caractérisée en ce que**
pour permettre le centrage de la partie pivotante (2) de la transmission il est prévu au moins un tourillon d'axe (29).

12. Transmission conforme à la revendication 11,
**caractérisée en ce que**
la poutre (3) et la transmission s'appuient par l'intermédiaire du tourillon d'axe (29) contre le châssis (26) de la machine.

13. Transmission conforme à l'une des revendications 1 à 12,
**caractérisée par**
au moins un étage à roue de changement de vitesse.

14. Transmission conforme à la revendication 13,
**caractérisée en ce que**
l'étage à roue de changement de vitesse est un étage à roue de changement de vitesse frontale.

15. Transmission conforme à l'une des revendications 1 à 12,
**caractérisée par**
un étage de boite de vitesse.

16. Transmission conforme à l'une des revendications 1 à 15, pouvant être actionnée par une prise de force d'un véhicule tracteur,
**caractérisée en ce que**
l'arbre d'entrainement (7) de la transmission est monté essentiellement en alignement avec l'axe de la prise de force.

17. Herse rotative,
**caractérisée par**
une transmission conforme à l'une des revendications précédentes.
